# EUROPÄISCHE PATENTSCHRIFT

(11) **EP 3 438 619 B1**
(45) Veröffentlichungstag und Bekanntmachung des Hinweises auf die Patenterteilung: **16.10.2019**
(21) Anmeldenummer: 18177049.6
(22) Anmeldetag: 11.06.2018
(51) Int. Cl.: G01D 11/24, G12B 9/02, F15B 15/28

(54) **SENSORGEHÄUSE**
SENSOR CASING
BOÎTIER DE CAPTEUR

(30) Priorität: 04.07.2017 DE 102017114908
(43) Veröffentlichungstag der Anmeldung: 06.02.2019
(73) Patentinhaber: Sick AG, 79183 Waldkirch (DE)
(72) Erfinder: Marschner, Wolfgang, 79111 Freiburg (DE)

(56) Entgegenhaltungen:
- DE-A1-102007 058 411
- DE-A1-102010 045 667
- DE-U1- 9 414 869
- Anonym: "Sensoren für T-Nut-Zylinder. Zuverlässig, leistungsstark, robust magnetische Zylindersensoren von SICK für die C-Nut", Magnetische Zylindersensoren, Sick AG. , 7. Oktober 2016 (2016-10-07), Seiten FP-H-168, XP002786713, Gefunden im Internet: URL:https://cdn.sick.com/media/docs/4/44/8 44/Product_catalog_Magnetic_Cylinder_Senso rs_de_IM0051844.PDF [gefunden am 2018-11-22]

## Beschreibung

Die vorliegende Erfindung betrifft ein Sensorgehäuse nach dem Oberbegriff von Anspruch 1.

Ein solches Sensorgehäuse ist beispielsweise aus der DE 94 14 869 U1 bekannt.

Die DE 94 14 869 U1 offenbart eine Vorrichtung zur lösbaren Verankerung eines Sensors in einer Verankerungsnut, wobei die Verankerungsnut einen durch sich gegenüberliegende Längsvorsprünge begrenzten Nuthals und einen in Tiefenrichtung an den Nuthals anschließenden breiteren Verankerungsabschnitt aufweist, mit einer mit dem Sensor verbundenen Klemmeinrichtung, die ein Klemmteil aufweist, das bei verankertem Sensor eine Klemmstellung einnimmt, in der es in die Verankerungsnut eingreift und mit der Innenfläche der Verankerungsnut verspannt ist, wobei das Klemmteil zwischen einer das Einsetzen in die Verankerungsnut durch den Nuthals hindurch ermöglichenden Einsetzstellung und der Klemmstellung bewegbar ist und daß zusätzlich zu der Klemmeinrichtung mit Abstand zu dieser eine Verrastungseinrichtung vorgesehen ist, die mindestens eine Rastnase aufweist, die bei verankertem Sensor in dem Verankerungsabschnitt der Verankerungsnut unter Einnahme einer Raststellung einen der Längsvorsprünge hintergreift, und die entgegen einer Rückstellkraft aus der Raststellung in eine Durchtrittsstellung bewegbar ist, in der ihr Durchtritt durch den Nuthals möglich ist.

Der Produktkatalog ,Magnetische Zylindersensoren' der SICK AG vom 7. Oktober 2016 offenbart auf den Seiten E88 bis E117 Positionssensoren für T-Nut-Zylinder und C-Nut-Zylinder und Sensoradapter für andere Zylinderarten.

Die DE 10 2007 058 411 A1 offenbart eine Vorrichtung zur lösbaren Verbindung eines Sensors in einer längsseits offenen Befestigungsnut, mit einem mit dem Sensor verbundenen drehbeweglichen Klemmteil, das bei in die Befestigungsnut eingesetztem Sensor durch Verdrehen in eine Klemmstellung verbringbar ist, in der es mit gegenüberliegenden Innenflächen der Befestigungsnut verspannt ist. Das Klemmteil weist zwei bezüglich seiner Drehachse radial nach außen weisende Klemmflächen auf, die sich an bezüglich der Drehachse gegenüberliegenden Stellen des Klemmteils befinden und eine exzentrische Form bilden, über die das Klemmteil in der Klemmstellung zwischen den Innenflächen verspannt ist. Die Klemmflächen weisen eine strukturierte Oberfläche auf, über die eine teilweise formschlüssige Verbindung zwischen den Klemmflächen und den Innenflächen gebildet ist.

Die DE 10 2010 045 667 A1 offenbart einen Sensor und ein damit ausgestattetes Arbeitsgerät. Der Sensor ist in einer Verankerungsnut des Arbeitsgerätes montierbar. Eine in einer Aussparung des Sensorgehäuses sitzende Klemmeinheit drückt das Sensorgehäuse mit einer Abstützfläche gegen den Nutgrund. Die Abstützfläche befindet sich an einem Abstützsteg, der zwei Seitenwände des Sensorgehäuses unterhalb der Aussparung miteinander verbindet. Erfindungsgemäß ist vorgesehen, dass zwischen der Klemmeinheit und dem Sensorgehäuse eine Andruckplatte angeordnet ist.

Zur Befestigung von Endlagensensoren für Pneumatikzylinder steht bei Miniaturzylindern meist eine C-förmige Nut zur Verfügung. Diese Nuten existieren in den verschiedensten Varianten, so dass für viele Nuten nur ein speziell hierfür ausgelegter Sensor bzw. ein speziell hierfür ausgelegtes Sensorgehäuse befestigt werden kann.

Marktüblich sind magnetische Zylindersensoren mit länglichem Gehäuse in Form der C-Nut. Diese werden z. B. stirnseitig in die Nut eingeführt und mit einem Gewindestift, der am Ende des Gehäuses positioniert ist, festgeklemmt. Eine weitere Bauform dieser Sensoren kann radial montiert werden. Diese können mit einem speziellen Mechanismus, z. B. einem Exzenter oder einem Spannflügel in der Nut festgeklemmt werden.

Durch die große Varianz an C-Nuten kann ein Sensor meist nur sehr wenige dieser Nut-Varianten abdecken. Ist die Nut zu breit oder zu hoch versagt die Befestigung. Die Sensoren für eine stirnseitige Montage lassen sich meist nur in wenigen C-Nuten fixieren, da hier das Sensorgehäuseform sehr nahe an der Nutgeometrie liegen muss.

Eine Befestigung mittels Spannflügel, der durch Drehen der Schraube zunächst auf 90° zur Längsachse der Nut ausschwenkt und dann beim Weiterdrehen der Schraube nach oben bewegt wird, kann ebenfalls nur eine eingeschränkte Anzahl an Nutvarianten abdecken. Ist die Nut schmaler als der Spannflügel breit ist, kann dieser nicht vollständig auf 90° zur Längsachse der Nut ausschwenken. Dadurch entsteht ein Rückstellmoment auf dem Spannflügel. Ist das Reibmoment im Gewinde zwischen Schraube und Spannflügel kleiner als das Rückstellmoment, wird sich der Spannflügel beim weiteren Anziehen wieder in Richtung seiner Ausgangslage bewegen. Eine Verspannung der Befestigung unterhalb der Nutschulter ist in diesem Fall eher zufällig oder gar nicht möglich.

Eine Aufgabe der Erfindung besteht darin, ein verbessertes Sensorgehäuse bereitzustellen, das in fast allen C-Nutvarianten sicher fixiert werden kann.

Die Aufgabe wird gemäß Anspruch 1 gelöst durch ein Sensorgehäuse mit mindestens einem Sensorelement, wobei ein Teil des Sensorgehäuses in eine Befestigungsnut eines metallischen Befestigungskörpers ragt zur Befestigung des Sensorgehäuses, wobei es sich bei der Befestigungsnut um eine C-förmige Nut handelt, wobei die Befestigungsnut einen geraden Abschnitt und einen daran anschließenden teilkreisförmigen Abschnitt aufweist, wobei an dem Sensorgehäuse eine Schraube vorgesehen ist, wobei die Schraube ein Betätigungselement zur Drehung der Schraube aufweist, wobei eine Drehachse für die Schraube quer zu einer Längsachse der Befestigungsnut liegt mit einem mit dem Sensorgehäuse verbundenen drehbeweglichen ersten Spannflügel, der mittels einem Gewinde mit der Schraube verbunden ist, der bei in die Befestigungsnut eingesetztem Sensorgehäuse durch Verdrehen in eine Klemmstellung verbringbar ist, in der dieser mit gegenüberliegenden Innenflächen der Befestigungsnut verspannbar ist, der erste Spannflügel zwei bezüglich seiner Drehachse radial nach außen weisenden Klemmflügel aufweist, die sich an bezüglich der Drehachse gegenüberliegenden Stellen des ersten Spannflügels befinden, über die der erste Spannflügel in der Klemmstellung zwischen den Innenflächen der Nutwand verspannbar ist, mit einem mit dem Sensorgehäuse verbundenen drehbeweglichen zweiten Spannflügel, der mittels einem Gewinde mit der Schraube verbunden ist, der bei in die Befestigungsnut eingesetztem Sensorgehäuse durch Verdrehen in eine Klemmstellung verbringbar ist, in der dieser mit gegenüberliegenden Innenflächen der Befestigungsnut verspannbar ist, der zweite Spannflügel zwei bezüglich seiner Drehachse radial nach außen weisenden Klemmflügel aufweist, die sich an bezüglich der Drehachse gegenüberliegenden Stellen des zweiten Spannflügels befinden, über die der zweite Spannflügel in der Klemmstellung zwischen den Innenflächen der Nutwand verspannbar ist, wobei der zweite Spannflügel zwischen dem Betätigungselement und dem ersten Spannflügel angeordnet ist, wobei die Außenflächen der Klemmflügel des zweiten Spannflügels einen größeren Durchmesser haben als die Außenflächen der Klemmflügel des ersten Spannflügels und wobei das Sensorgehäuse mit dem ersten oder dem zweiten Spannflügel in der Befestigungsnut verspannt ist.

Mit einem Spannflügel alleine kann das gesamte Spektrum der Nutbreiten nicht abgedeckt werden. Entweder der Spannflügel ist zu schmal, dann würde er bei zu breiten Nuten zwischen den Nutschultern herausrutschen. Ist er zu breit, würde er in schmalen Nuten nicht seine 90°-Endlage erreichen und bei vielen Nuten wieder in seine Ausgangslage zurückgedreht werden. Die Lösung ist eine Kombination mit einem ersten Spannflügel mit Klemmflügeln mit einem kleineren Durchmesser und einem zweiten Spannflügel mit Klemmflügeln mit einem größeren Durchmesser.

Der erste Spannflügel ist so ausgelegt, dass dieser immer in jeder Nut in seine Endlage ausschwenken kann.

In engen Nuten kann der zweite Spannflügel nicht vollständig ausschwenken und wird beim Anziehen der Schraube durch das Rückstellmoment in Richtung seiner Ausgangslage zurückgedreht. Somit wird dieser sich an der Nutwand anlegen, jedoch nicht zur Sensorgehäusebefestigung beitragen. Der erste Spannflügel wird sich, da dieser aufgrund seiner eingenommenen Endposition kein Rückstellmoment erfährt, nach oben unter die Nutschulter mittels der Schraube festziehen lassen. Eine Verspannung zwischen den Innenflächen der Nutwand der Befestigungsnut wird dadurch erreicht, dass der Spannflügel mit den Flächen und/oder der Kante des Spannflügels auf der Unterseite der Nutschulter verspannt wird und das Sensorgehäuse wird dabei in den Nutgrund gedrückt.

Soll der Sensor in einer breiten Nut befestigt werden, so können beide Spannflügel bis zur Endposition ausschwenken. Der erste Spannflügel ist in diesem Fall ohne Funktion, der obere zweite Spannflügel kann sich jedoch unter der Nutschulter verspannen.

In Weiterbildung der Erfindung wird die Klemmstellung durch einen Anschlag begrenzt, wobei der Spannflügel durch den Anschlag in einem Drehwinkel von 90° begrenzt ist.

Der Anschlag wirkt auf beide Spannflügel. Die Spannflügel schwenken dadurch in eine Endlage von 90° zur Längsachse der Nut aus, falls die Befestigungsnut eine entsprechende Breite aufweist. In dieser Position ist eine bevorzugte Befestigung des Sensorgehäuses durch die Spannflügel vorgesehen.

In Weiterbildung der Erfindung weist das Gewinde der Schraube eine Beschichtung oder eine Verformung auf, wodurch eine zusätzliche Reibung zwischen dem Gewinde der Schraube und den Spannflügeln erreicht wird.

Um das Ausschwenken der Spannflügel zu verbessern oder sicherzustellen muss die Reibung im Gewinde zwischen den Spannflügeln und der Schraube ausreichend groß sein. Dies kann durch eine geeignete Beschichtung, einen speziellen Lack oder durch eine Verformung im Gewinde erreicht werden, so dass das Gewinde schwergängig wird.

In Weiterbildung ist das Sensorelement innerhalb der Befestigungsnut positioniert. Dadurch liegt das Sensorelement näher am Kolben des Zylinders. Der Kolben weist beispielsweise einen Permanentmagneten auf, der von dem Sensorelement detektiert werden kann. Je näher sich das Sensorelement an dem Kolben bzw. an dem Permanentmagneten befindet, desto besser ist das Sensorsignal, was durch eine Steuer- und Auswerteeinheit ausgewertet wird.

In Weiterbildung der Erfindung ist die Schraube durch eine Aufnahme unverlierbar im Sensorgehäuse gehalten.

Um ein Herausfallen der Schraube zu verhindern, ist im Gehäuse eine Aufnahme, beispielsweise eine Bohrung vorgesehen. Der Durchmesser dieser Bohrung ist so ausgelegt, dass sich das Gewinde der Schraube bei der Montage noch durch diese Engstelle, beispielsweise in einem Kunststoffgehäuse durchschrauben lässt. Zusätzlich hat diese Aufnahme auch die Funktion die Schraube zu zentrieren und zu führen. Dabei können zwei beabstandete Aufnahmen vorgesehen sein. Die Schraube wird so sicher in ihrer Position gehalten und kann beim Anziehen nicht zur Seite aus dem Gehäuse verkippen.

In Weiterbildung ist im Sensorgehäuse ein Absatz vorgesehen, wodurch das Sensorgehäuse durch die Schraube gegen den Nutgrund der Befestigungsnut gedrückt wird.

Der Absatz an der Schraube dient zum Festklemmen des Sensorgehäuses in der Nut. Durch das Festziehen eines der beiden Spannflügel gegen die Nutschulter wird die Schraube in die entgegengesetzte Richtung nach unten in Richtung des Nutbodens gedrückt. Der Absatz drückt auf das Sensorgehäuse und spannt dieses nach unten in die Nut. So ist das Sensorgehäuse sicher in der Nut fixiert.

Alternativ kann das Sensorgehäuse so ausgelegt werden, dass das Betätigungselement, bzw. der Schraubenkopf auf der Fläche oberhalb der Aufnahme beim Festziehen zur Anlage kommt. So kann die Befestigung des Gehäuses noch verbessert werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Sensorgehäuse in einer Schnittdarstellung;
- Figur 2: ein Sensorgehäuse und eine Nut in einer Schnittdarstellung;
- Figur 3a bis 3c: ein Sensorgehäuse gemäß einem ersten Ausführungsbeispiel;
- Figur 4a bis 4c: ein Sensorgehäuse gemäß einem zweiten Ausführungsbeispiel;
- Figur 5a bis 5c: ein Sensorgehäuse gemäß einem dritten Ausführungsbeispiel;
- Figur 6a bis 6c: ein Sensorgehäuse gemäß einem vierten Ausführungsbeispiel.

In den nachfolgenden Figuren sind identische Teile mit identischen Bezugszeichen versehen.

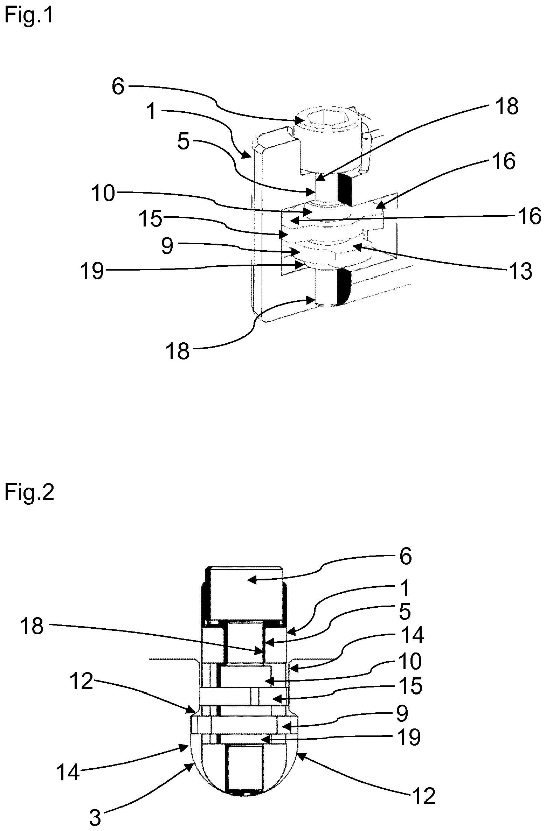

Figur 1 zeigt eine perspektivische Schnittdarstellung des Sensorgehäuses gemäß Figur 2. Dabei sind die Schraube und die Spannflügel ohne Schnitt dargestellt.

Figur 2 zeigt ein Sensorgehäuse mit mindestens einem Sensorelement, wobei ein Teil des Sensorgehäuses 1 in eine Befestigungsnut 3 eines metallischen Befestigungskörpers ragt zur Befestigung des Sensorgehäuses 1, wobei an dem Sensorgehäuse 1 eine Schraube 5 vorgesehen ist, wobei die Schraube 5 ein Betätigungselement 6 zur Drehung der Schraube 5 aufweist.

Eine Drehachse für die Schraube 5 liegt quer zu einer Längsachse der Befestigungsnut 3 mit einem mit dem Sensorgehäuse verbundenen drehbeweglichen ersten Spannflügel 9, der mittels einem Gewinde 10 mit der Schraube 5 verbunden ist, der bei in die Befestigungsnut 3 eingesetztem Sensorgehäuse 2 durch Verdrehen in eine Klemmstellung verbringbar ist, in der dieser mit gegenüberliegenden Innenflächen 12 der Befestigungsnut 3 verspannbar ist.

Der erste Spannflügel 9 weist gemäß Figur 1 zwei bezüglich seiner Drehachse 7 radial nach außen weisenden Klemmflügel 13 auf, die sich an bezüglich der Drehachse 7 gegenüberliegenden Stellen des ersten Spannflügels 9 befinden, über die der erste Spannflügel 9 in der Klemmstellung zwischen den Innenflächen 12 der Nutwand 14 verspannbar ist, gemäß Figur 2.

Weiter ist ein mit dem Sensorgehäuse 1 verbundener drehbeweglicher zweiter Spannflügel 15 angeordnet, der mittels einem Gewinde 10 mit der Schraube 5 verbunden ist, der bei in die Befestigungsnut 3 eingesetztem Sensorgehäuse 1 durch Verdrehen in eine Klemmstellung verbringbar ist, in der dieser mit gegenüberliegenden Innenflächen 12 der Befestigungsnut 3 verspannbar ist, der zweite Spannflügel 15 weist zwei bezüglich seiner Drehachse 7 radial nach außen weisenden Klemmflügel 16 auf, die sich an bezüglich der Drehachse 7 gegenüberliegenden Stellen des zweiten Spannflügels 15 befinden, über die der zweite Spannflügel 15 in der Klemmstellung 11 zwischen den Innenflächen 12 der Nutwand 14 verspannbar ist.

Der zweite Spannflügel 15 ist zwischen dem Betätigungselement 6 und dem ersten Spannflügel 9 angeordnet, wobei die Außenflächen der Klemmflügel 16 des zweiten Spannflügels 15 einen größeren Durchmesser haben als die Außenflächen der Klemmflügel 13 des ersten Spannflügels 9 und wobei das Sensorgehäuse 1 mit dem ersten Spannflügel 9 oder dem zweiten Spannflügel 15 in der Befestigungsnut 3 verspannt ist.

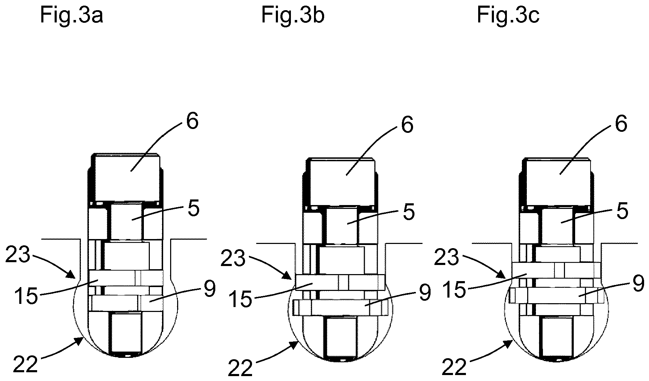

Figur 3a bis 3c zeigt die Befestigung des Sensorgehäuses 1 in einer ersten Nut-Variante.

Figur 3a zeigt das Sensorgehäuse 1 in einer Grundstellung, wobei das Sensorgehäuse 1 von oben in die Befestigungsnut 3 eingeführt ist. Bei der Befestigungsnut 3 handelt es sich um eine C-förmige Nut, wobei die Befestigungsnut 3 einen geraden Abschnitt und einen daran anschließenden teilkreisförmigen Abschnitt aufweist. Das Sensorgehäuse 1 liegt auf dem Nutboden auf. Die Klemmflügel der Spannflügel 9 und 15 befinden sich jeweils in einer Grundstellung und ragen nicht über das Sensorgehäuse 1 hinaus.

Figur 3b zeigt das Sensorgehäuse 1 nachdem das Betätigungselement 6 der Schraube 5 betätig worden ist. Die Klemmflügel des ersten Spannflügels 9 konnten sich aufgrund der Nutweite um 90° drehen und liegen nun unter der Nutschulter 23. Die Klemmflügel des zweiten Spannflügels 15 konnten sich aufgrund der Lage des zweiten Spannflügels 15 im Nuthals nicht um 90° drehen und liegen nicht unter der Nutschulter 23.

Durch Drehung der Schraube 5 bewegen sich die Spannflügel 9 und 15 weiter in Richtung des Betätigungselements 6. Dies ist in Figur 3c. dargestellt. Die Klemmflügel des ersten Spannflügels 9 sind nun unter der Nutschulter 23 verklemmt und bewirken eine Fixierung des Sensorgehäuses 1 in der C-förmigen Nut. Die Klemmflügel des zweiten Spannflügels 15 liegen an den Seitenflächen im Nuthals an und sind somit in dieser Stellung ohne Funktion. Das Sensorgehäuse 1 wird gemäß diesem Ausführungsbeispiels durch den ersten Spannflügel 9 fixiert.

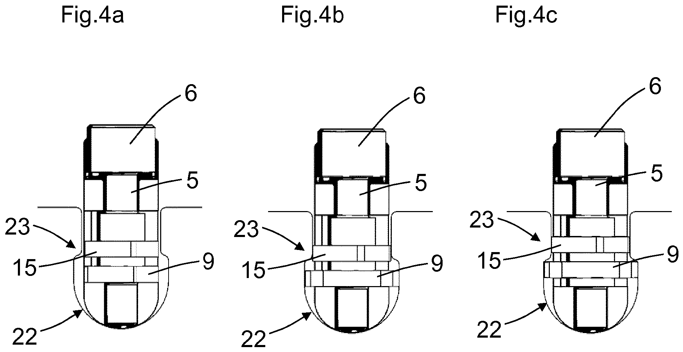

Figur 4a bis 4c zeigt die Befestigung des Sensorgehäuses 1 in einer zweiten Nut-Variante.

Figur 4a zeigt das Sensorgehäuse 1 in einer Grundstellung, wobei das Sensorgehäuse 1 von oben in die Nut eingeführt ist. Bei der Nut handelt es sich um eine C-förmige Nut, wobei die Befestigungsnut 3 einen geraden Abschnitt und einen daran anschließenden weiteren geraden Abschnitt und einen halbkreisförmigen Abschnitt aufweist. Der Nuthals ist enger als die Befestigungsnut 3. Das Sensorgehäuse 1 liegt auf dem Nutboden auf. Die Klemmflügel der Spannflügel 9 und 15 befinden sich jeweils in einer Grundstellung und ragen nicht über das Sensorgehäuse 1 hinaus.

Figur 4b zeigt das Sensorgehäuse 1 nachdem das Betätigungselement 6 der Schraube 5 betätigt worden ist. Die Klemmflügel des ersten Spannflügels 9 konnten sich aufgrund der Nutweite um 90° drehen und liegen nun unter der Nutschulter 23. Die Klemmflügel des zweiten Spannflügels 15 konnten sich aufgrund der Lage des zweiten Spannflügels im Nuthals nicht um 90° drehen und liegen nicht unter der Nutschulter 23.

Durch Drehung der Schraube 5 bewegen sich die Spannflügel weiter in Richtung des Betätigungselements 6. Dies ist in Figur 4c. dargestellt. Die Klemmflügel des ersten Spannflügels 9 sind nun unter der Nutschulter 23 verklemmt und bewirken eine Fixierung des Sensorgehäuses 1 in der C-förmigen Nut. Die Klemmflügel des zweiten Spannflügels 15 liegen an den Seitenflächen im Nuthals an und sind somit in dieser Stellung ohne Funktion. Das Sensorgehäuse 1 wird gemäß diesem Ausführungsbeispiels durch den ersten Spannflügel 9 fixiert.

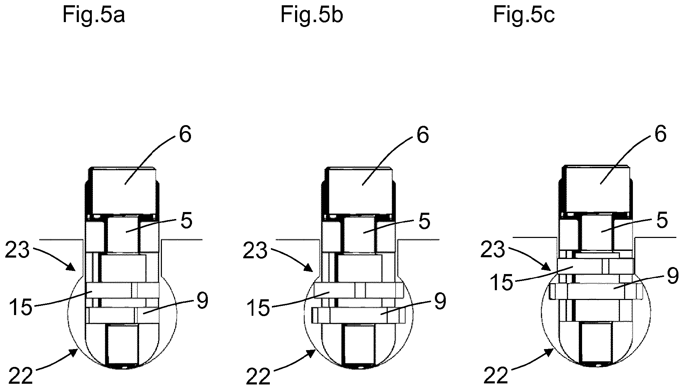

Figur 5a bis 5c zeigt die Befestigung des Sensorgehäuses 1 in einer dritten Nut-Variante.

Figur 5a zeigt das Sensorgehäuse 1 in einer Grundstellung, wobei das Sensorgehäuse 1 von oben in die Befestigungsnut 3 eingeführt ist. Bei der Befestigungsnut 3 handelt es sich um eine C-förmige Nut, wobei die Befestigungsnut 3 einen geraden Abschnitt und einen teilkreisförmigen Abschnitt aufweist, der jedoch größer ist als gemäß den Figuren 3a bis 3c. Der Nuthals ist enger als die Befestigungsnut 3. Das Sensorgehäuse 1 liegt auf dem Nutboden auf. Die Klemmflügel der Spannflügel 9 und 15 befinden sich jeweils in einer Grundstellung und ragen nicht über das Sensorgehäuse 1 hinaus.

Figur 5b zeigt das Sensorgehäuse 1 nachdem das Betätigungselement 6 der Schraube 5 betätig worden ist. Die Klemmflügel des ersten Spannflügels 9 konnten sich aufgrund der Nutweite um 90° drehen und liegen nun unter der Nutschulter 23. Die Klemmflügel des zweiten Spannflügels 15 konnten sich teilweise aufgrund der Lage des zweiten Spannflügels 15 im Nuthals drehen jedoch nicht vollständig um 90° drehen und liegt deshalb nur teilweise unter der Nutschulter 23.

Durch Drehung der Schraube 5 bewegen sich die Spannflügel 9 und 15 weiter in Richtung des Betätigungselements 6. Dies ist in Figur 5c. dargestellt. Die Klemmflügel des ersten Spannflügels 9 sind nun unter der Nutschulter 23 verklemmt und bewirken eine Fixierung des Sensorgehäuses 1 in der C-förmigen Nut. Die Klemmflügel des zweiten Spannflügels 15 wurden aufgrund der nicht vollständigen Drehung um 90° wieder in die Grundstellung zurückgedreht und liegen nun an den Seitenflächen im Nuthals an und sind somit in dieser Stellung ohne Funktion. Das Sensorgehäuse 1 wird gemäß diesem Ausführungsbeispiel durch den ersten Spannflügel 9 fixiert.

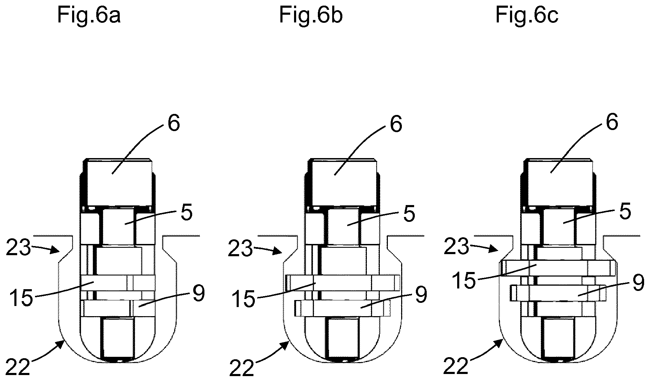

Figur 6a bis 6c zeigt die Befestigung des Sensorgehäuses 1 in einer vierten Nut-Variante.

Figur 6a zeigt das Sensorgehäuse 1 in einer Grundstellung, wobei das Sensorgehäuse 1 von oben in die Befestigungsnut 3 eingeführt ist. Bei der Befestigungsnut 3 handelt es sich um eine C-förmige Nut, wobei die Befestigungsnut 3 einen kurzen geraden Abschnitt und einen daran anschließenden weiteren weiten geraden Abschnitt aufweist, der von einem halbkreisförmigen Abschnitt Richtung Nutgrund abgeschlossen wird. Das Sensorgehäuse 1 liegt auf dem Nutboden auf. Die Klemmflügel der Spannflügel 9 und 15 befinden sich jeweils in einer Grundstellung und ragen nicht über das Sensorgehäuse 1 hinaus.

Figur 6b zeigt das Sensorgehäuse 1 nachdem das Betätigungselement 6 der Schraube 5 betätig worden ist. Die Klemmflügel des ersten Spannflügels 9 konnten sich aufgrund der Nutweite um 90° drehen und liegen nun unter der Nutschulter 23. Die Klemmflügel des zweiten Spannflügels 15 konnten sich aufgrund der Lage des zweiten Spannflügels 15 im Nuthals ebenfalls um 90° drehen und liegen auch unter der Nutschulter 23.

Durch Drehung der Schraube 5 bewegen sich die Spannflügel 9 und 15 weiter in Richtung des Betätigungselements 6. Dies ist in Figur 6c dargestellt. Die Klemmflügel des zweiten Spannflügels 15 sind nun unter der Nutschulter 23 verklemmt und bewirken eine Fixierung des Sensorgehäuses 1 in der C-förmigen Nut. Die Klemmflügel des ersten Spannflügels 9 befinden sich unter dem zweiten Spannflügel 15 und erreichen die Nutwand nicht, weshalb die Klemmflügel des ersten Spannflügels 9 in dieser Ausführungsform ohne Funktion sind. Das Sensorgehäuse 1 wird gemäß diesem Ausführungsbeispiel durch den zweiten Spannflügel 15 fixiert.

### Bezugszeichen:

1 Sensorgehäuse
3 Befestigungsnut
5 Schraube
6 Betätigungselement
9 erster Spannflügel
10 Gewinde
12 Innenflächen
13, 16 Klemmflügel
14 Nutwand
15 zweiter Spannflügel
18 Aufnahme
19 Absatz
23 Nutschulter

## Patentansprüche

1. Sensorgehäuse (1) mit mindestens einem Sensorelement, wobei ein Teil des Sensorgehäuses (1) in eine Befestigungsnut (3) eines metallischen Befestigungskörpers ragt zur Befestigung des Sensorgehäuses (1), wobei es sich bei der Befestigungsnut (3) um eine C-förmige Nut handelt, wobei die Befestigungsnut (3) einen geraden Abschnitt und einen daran anschließenden teilkreisförmigen Abschnitt aufweist, wobei an dem Sensorgehäuse (1) eine Schraube (5) vorgesehen ist, wobei die Schraube (5) ein Betätigungselement (6) zur Drehung der Schraube (5) aufweist, wobei eine Drehachse für die Schraube (5) quer zu einer Längsachse der Befestigungsnut (3) liegt mit einem mit dem Sensorgehäuse verbundenen drehbeweglichen ersten Spannflügel (9), der mittels einem Gewinde (10) mit der Schraube (5) verbunden ist, der bei in die Befestigungsnut (3) eingesetztem Sensorgehäuse (2) durch Verdrehen in eine Klemmstellung verbringbar ist, in der dieser mit gegenüberliegenden Innenflächen (12) der Befestigungsnut (3) verspannbar ist, der erste Spannflügel (9) zwei bezüglich seiner Drehachse (7) radial nach außen weisenden Klemmflügel (13) aufweist, die sich an bezüglich der Drehachse gegenüberliegenden Stellen des ersten Spannflügels (9) befinden, über die der erste Spannflügel (9) in der Klemmstellung zwischen den Innenflächen (12) der Nutwand (14) verspannbar ist,
**dadurch gekennzeichnet, dass**
ein mit dem Sensorgehäuse verbundener drehbeweglicher zweiter Spannflügel (15) angeordnet ist, der mittels einem Gewinde (10) mit der Schraube (5) verbunden ist, der bei in die Befestigungsnut (3) eingesetztem Sensorgehäuse (1) durch Verdrehen in eine Klemmstellung (11) verbringbar ist, in der dieser mit gegenüberliegenden Innenflächen (12) der Befestigungsnut (3) verspannbar ist, der zweite Spannflügel (15) zwei bezüglich seiner Drehachse radial nach außen weisenden Klemmflügel (16) aufweist, die sich an bezüglich der Drehachse gegenüberliegenden Stellen des zweiten Spannflügels (15) befinden, über die der zweite Spannflügel (15) in der Klemmstellung (11) zwischen den Innenflächen (12) der Nutwand (14) verspannbar ist, wobei der zweite Spannflügel (15) zwischen dem Betätigungselement (6) und dem ersten Spannflügel (9) angeordnet ist, wobei die Außenflächen der Klemmflügel (16) des zweiten Spannflügels (15) einen größeren Durchmesser haben als die Außenflächen der Klemmflügel (13) des ersten Spannflügels (9) und wobei das Sensorgehäuse (1) mit dem ersten Spannflügel (9) oder dem zweiten Spannflügel (15) in der Befestigungsnut (3) verspannt ist.

2. Sensorgehäuse nach Anspruch 1, **dadurch gekennzeichnet, dass** die Klemmstellung durch einen Anschlag begrenzt wird, wobei der Spannflügel (9, 15) durch den Anschlag in einem Drehwinkel von 90° begrenzt ist.

3. Sensorgehäuse nach mindestens einem der vorhergehenden Ansprüche, **dadurch gekennzeichnet, dass** das Gewinde (10) der Schraube (5) eine Beschichtung oder eine Verformung aufweist, wodurch eine zusätzliche Reibung zwischen dem Gewinde (10) der Schraube (5) und den Spannflügeln (9, 15) erreicht wird.

4. Sensorgehäuse nach mindestens einem der vorhergehenden Ansprüche, **dadurch gekennzeichnet, dass** das Sensorelement (2) innerhalb der Befestigungsnut (3) positioniert ist.

5. Sensorgehäuse nach mindestens einem der vorhergehenden Ansprüche, **dadurch gekennzeichnet, dass** die Schraube (5) durch eine Aufnahme (18) unverlierbar im Sensorgehäuse (1) gehalten ist.

6. Sensorgehäuse nach mindestens einem der vorhergehenden Ansprüche, **dadurch gekennzeichnet, dass** im Sensorgehäuse (1) ein Absatz (19) vorgesehen ist, wodurch das Sensorgehäuse (1) durch die Schraube (5) gegen den Nutgrund der Befestigungsnut (3) gedrückt wird.

## Claims

1. A sensor housing (1) having at least one sensor element, wherein a part of the sensor housing (1) projects into a fastening groove (3) of a metal fastening member to fasten the sensor housing (1); wherein the fastening groove (3) is a C-shaped groove; wherein the fastening groove (3) has a straight section and a section of part circle shape adjoining it; wherein a screw (5) is provided at the sensor housing (1); wherein the screw (5) has an actuation element (6) to rotate the screw (5); wherein an axis of rotation for the screw (5) is transverse to a longitudinal axis of the fastening groove (3) having a first tensioning wing (9) that is rotationally movably connected to the sensor housing, that is connected to the screw (5) by means of a thread (10), that can be brought into a clamping position by rotation with a sensor housing (2) placed into the fastening groove (3) in which clamping position it can be tensioned with oppositely disposed inner surfaces (12) of the fastening groove (3); and wherein the first tensioning wing (9) has two clamping wings (13) that face radially outwardly with respect to its axis of rotation, that are located at oppositely disposed points of the first tensioning wing (9) with respect to the axis of rotation, and via which the first tensioning wing (9) can be tensioned between the inner surfaces (12) of the groove wall (14) in the clamping position,
**characterized in that**
a second tensioning wing (15) is arranged that is rotationally movably connected to the sensor housing, that is connected to the screw (5) by means of a thread (10), and that can be brought into a clamping position (11) by rotation with a sensor housing (1) placed into the fastening groove (3), in which clamping position (11) it can be tensioned with oppositely disposed inner surfaces (12) of the fastening groove (3); and **in that** the second tensioning wing (15) has two clamping wings (16) that face radially outwardly with respect to its axis of rotation that are located at oppositely disposed points of the second tensioning wing (15) with respect to its axis of rotation, and via which the second tensioning wing (15) can be tensioned between the inner surfaces (12) of the groove wall (14) in the clamping position (11), with the second tensioning wing (15) being arranged between the actuation element (6) and the first tensioning wing (9), with the outer surfaces of the clamping wings (16) of the second tensioning wing (15) having a greater diameter than the outer surfaces of the clamping wings (13) of the first tensioning wing (9), and with the sensor housing (1) being tensioned with the first tensioning wing (9) or with the second tensioning wing (15) in the fastening groove.

2. A sensor housing in accordance with claim 1,
**characterized in that** the clamping position is bounded by an abutment, with the tensioning wing (9, 15) being bounded by the abutment at an angle of rotation of 90°.

3. A sensor housing in accordance with at least one of the preceding claims, **characterized in that** the thread (10) of the screw (5) has a coating or a deformation, whereby additional friction is achieved between the thread (10) of the screw (5) and the tensioning wings (9, 15).

4. A sensor housing in accordance with at least one of the preceding claims, **characterized in that** the sensor element (2) is positioned within the fastening groove (3).

5. A sensor housing in accordance with at least one of the preceding claims, **characterized in that** the screw (5) is captively held in the sensor housing (1) by a receiver (18).

6. A sensor housing in accordance with at least one of the preceding claims, **characterized in that** a shoulder (19) is provided in the sensor housing (1), whereby the sensor housing (1) is pressed by the screw (5) toward the groove base of the fastening groove (3).

## Revendications

1. Boîtier de capteur (1) comportant au moins un élément capteur,
dans lequel
une partie du boîtier de capteur (1) pénètre dans une rainure de fixation (3) d'un corps de fixation métallique pour fixer le boîtier de capteur (1),
la rainure de fixation (3) est une rainure en forme de C,
la rainure de fixation (3) présente une portion rectiligne et une portion qui s'y raccorde et qui est en forme de cercle partiel,
une vis (5) est prévue sur le boîtier de capteur (1),
la vis (5) présente un élément d'actionnement (6) pour faire tourner la vis (5), un axe de rotation pour la vis (5) se situe transversalement à un axe longitudinal de la rainure de fixation (3),
comportant une première ailette de serrage (9) mobile en rotation reliée au boîtier de capteur, qui est reliée à la vis (5) au moyen d'un filetage (10) et qui, le boîtier de capteur (2) étant inséré dans la rainure de fixation (3), peut être amenée par rotation jusque dans une position de coincement dans laquelle elle peut être serrée sur des surfaces intérieures (12) opposées de la rainure de fixation (3),
la première ailette de serrage (9) présente deux ailettes de coincement (13) dirigées radialement vers l'extérieur par rapport à son axe de rotation (7) et situées à des emplacements opposés par rapport à l'axe de rotation de la première ailette de serrage (8) et permettant de serrer la première ailette de serrage (9) dans la position de coincement entre les surfaces intérieures (12) de la paroi de rainure (14),
**caractérisé en ce que**
il est prévu une seconde ailette de serrage (15) mobile en rotation qui reliée au boîtier de capteur, qui est reliée à la vis (5) au moyen d'un filetage (10), et qui, le boîtier de capteur (1) étant inséré dans la rainure de fixation (3), peut être amenée par rotation jusque dans une position de coincement (11) dans laquelle elle peut être serrée sur des surfaces intérieures (12) opposées de la rainure de fixation (3), la seconde ailette de serrage (15) présente deux ailettes de coincement (16) dirigées radialement vers l'extérieur par rapport à son axe de rotation (7) et situées à des emplacements opposés par rapport à l'axe de rotation de la seconde ailette de serrage (15) et permettant de serrer la seconde ailette de serrage (15) dans la position de coincement (11) entre les surfaces intérieures (12) de la paroi de rainure (14),
la seconde ailette de serrage (15) est agencée entre l'élément d'actionnement (6) et la première ailette de serrage (9),
les surfaces extérieures des ailettes de coincement (16) de la seconde ailette de serrage (15) ont un diamètre supérieur à celui des surfaces extérieures des ailettes de coincement (13) de la première ailette de serrage (9), et
le boîtier de capteur (1) est serré dans la rainure de fixation (3) par la première ailette de serrage (9) ou par la seconde ailette de serrage (15).

2. Boîtier de capteur selon la revendication 1,
**caractérisé en ce que**
la position de coincement est limitée par une butée, l'ailette de serrage (9, 15) étant limitée sur un angle de rotation de 90° par la butée.

3. Boîtier de capteur selon l'une au moins des revendications précédentes,
**caractérisé en ce que**
le filetage (10) de la vis (5) présente un revêtement ou une déformation, moyennant quoi une friction supplémentaire est obtenue entre le filetage (10) de la vis (5) et les ailettes de serrage (9, 15).

4. Boîtier de capteur selon l'une au moins des revendications précédentes,
**caractérisé en ce que**
l'élément capteur (2) est positionné à l'intérieur de la rainure de fixation (3).

5. Boîtier de capteur selon l'une au moins des revendications précédentes,
**caractérisé en ce que**
la vis (5) est retenue de façon imperdable dans le boîtier de capteur (1) par un logement (18).

6. Boîtier de capteur selon l'une au moins des revendications précédentes,
**caractérisé en ce que**
un talon (19) est prévu dans le boîtier de capteur (1), moyennant quoi le boîtier de capteur (1) est poussé contre le fond de la rainure de fixation (3) par la vis (5).
